# EUROPÄISCHE PATENTSCHRIFT

(11) **EP 3 596 171 B1**
(45) Veröffentlichungstag und Bekanntmachung des Hinweises auf die Patenterteilung: **01.09.2021**
(21) Anmeldenummer: 18710866.7
(22) Anmeldetag: 13.03.2018
(51) Int. Cl.: C09D 5/08

(54) **SIEGELFÄHIGER KORROSIONSSCHUTZLACK FÜR VERPACKUNGSFOLIE FÜR AGGRESSIVE FÜLLGÜTER**
HEAT-SEALABLE CORROSION PROTECTION LACQUER FOR PACKAGING FILM FOR AGGRESSIVE GOODS
VERNIS ANTI-CORROSION SCELLABLE POUR FILM D'EMBALLAGE DESTINÉ À DES PRODUITS DE REMPLISSAGE AGRESSIFS

(30) Priorität: 13.03.2017 AT 501952017
(43) Veröffentlichungstag der Anmeldung: 22.01.2020
(73) Patentinhaber: Constantia Pirk GmbH & Co. KG, 92712 Pirk (DE)
(72) Erfinder: KESMARSZKY, Thomas, 92729 Weiherhammer (DE); KICK, Markus, 92637 Weiden in der Oberpfalz (DE)
(74) Vertreter: Patentanwälte Barger, Piso & Partner
(86) Internationale Anmeldenummer: PCT/EP2018/056190
(87) Internationale Veröffentlichungsnummer: WO 2018/167033

(56) Entgegenhaltungen:
- WO-A1-2006/127995
- US-A1- 2008 103 237
- US-A1- 2015 031 819

## Beschreibung

Die Erfindung betrifft einen siegelfähigen Korrosionsschutzlack für eine Verpackungsfolie für Verpackungen für aggressive Füllgüter und für insbesondere Platinen auf Aluminiumbasis, mit denen Becher oder Behälter, die mit derartigen Gütern gefüllt sind, versiegelt werden, entsprechend dem Oberbegriff des Anspruches 1.

Die US 2015/0031819 A1 offenbart einen Überzug mit antikorrosiven Eigenschaften. Dieser enthält eine Fluorpolymer-Komponente, eine Polyamin-Komponente und eine Benzoxazin-Komponente und ist härtbar. Speziell ist ein Verfahren offenbart, das bevorzugte Verbindungsarten zwischen den Komponenten schafft. Diese Überzüge sind nützlich für das Beschichten oder Versiegeln von Oberflächen, speziell wenn der zu schützende Gegenstand Temperaturen über 180 C ausgesetzt ist. Als Beispiele werden Pipeline-Bestandteile, Brückenbestandteile und metallische Fundamente von Gebäuden angegeben, auch Wärmetauscher werden angeführt.

Die US 2008/0103237 A1 beschreibt eine wässrige, filmbildende Polymerzusammensetzung, deren Ziel es ist, die Konzentration flüchtiger organischer Verbindungen, die üblicherweise durch das Einführen von Bindemitteln in derartige Zusammensetzungen vorhanden sind, zu reduzieren. In dieser Druckschrift werden als Anwendungsgebiete Beschichtungen, selbsttragende Filme, Klebemittel, Versiegelungen, Tinten, überzugsartige Lacke und Dichtmassen genannt.

Die WO 2006/127995 A1 beschreibt ein in Wärme härtbares, PVC-freies Material, das speziell im Automotivbereich einsetzbar ist und dort als Dichtungsmittel verwendet werden kann. Als Ersatz für das PVC wird eine hybride Urethan-Acryl-Komposition vorgeschlagen, die gemeinsam mit einer Epoxid-Komponente, einem Härtemittel und einem Katalysator verwendet wird.

Aus der WO 2009/013064 A2 sind Beschichtungen für metallische, mineralische oder Untergründe aus Holz, Papier, Kunststoff bekannt, die vergilbungsbeständige, niedrigviskose, ungesättigte, amorphe Polyester enthalten und weitestgehend frei von Benzol oder Formaldehyd sind. Sie haften gut auf ihren Untergründen, auch bei kritischen Klimabedingungen. Für erfindungsgemäße Anwendungen sind diese Zusammensetzungen weder geeignet noch zugelassen.

Für ähnliche Anwendungen für metallische Oberflächen im Freien oder in korrosiver Umgebung ist es aus der US 2008/0268162 A1 bekannt, spezielle Silane aufzubringen und auf der Oberfläche auszuhärten. Auch dies ist für erfindungsgemäße Anwendungen weder geeignet noch zugelassen.

Die DE 10 2005 024 246 A1 beschreibt detailliert aber ohne spezielle Anwendungsgebiete zu nennen Copolymere, auf der Basis spezieller Acrylatmonomere zur Verwendung in Klebstoffen und Beschichtungen.

Die WO 2006/050915 A2 beschreibt ein Verfahren zur Beschichtung metallischer Oberflächen mit einer wässerigen Zusammensetzung aus vielen Komponenten. Auch hier geht es um feste Metalloberflächen im Freien (zB Fahrzeugkarosserien), die Zusammensetzung enthält zumindest Silane, Siloxane, Titanverbindungen, verschiedene Kationen, Amino- oder Harnstoffgruppen, Nitrogruppen und mehr und ist ebenfalls für erfindungsgemäße Anwendungen weder geeignet noch zugelassen.

Die DE 36 30 954 A1 von SIEMENS betrifft Photopolymere zur Verwendung als Schutz- und Isolierschichten auf dem Gebiete der Schaltungstechnik.

Wenn ein Behälter mit einem derartigen aggressiven Füllgut wie: parfümierte Creme, Öl, Fettemulsionen, saure bzw. alkalische Reinigungsmittel, alkoholische Füllgüter, etc., mit einer Aluminiumfolie geschlossen und diese gegen den Behälterrand gesiegelt wird, so ist es notwendig, auf der dem Gut zugewandten Seite der Aluminiumfolie ein Korrosionsschutzmittel aufzutragen, auf das in einem zweiten Schritt ein Heißsiegellack aufgetragen wird. In vielen Fällen, und auf diese bezieht sich die Erfindung, werden diese Schichten "in zwei Strichen" auflackiert, beispielsweise mittels Tauchlackierung, Pulverlackierung, Spritzlackierung. Hierbei ist es notwendig, dass das Korrosionsschutzmittel, auch Korrosionsschutzprimer genannt, stark vernetzt ist, um eine gute Korrosionsschutzwirkung zu gewährleisten. Die führt zu dem Problem, dass der anschließend aufgetragene Heißsiegellack auf der Primeroberfläche nicht sehr fest verankert ist, wodurch wieder die erreichbare Stärke der Festigkeit der Siegelnaht, beispielsweise gegen ein Polypropylenmaterial, aus dem der Becher oft besteht, nur klein ist.

Es besteht somit ein Bedarf an einer Verpackungsfolie mit einer Aluminiumfolie, die als Verpackungsmaterial für aggressive Güter verwendet werden kann, bei der sowohl der Korrosionsschutz in ausreichendem Ausmaß gewährleistet ist und als auch hohe Siegelfestigkeiten erreichbar sind.

Es ist Ziel und Aufgabe der Erfindung, eine solche Verpackungsfolie zu schaffen und zur Verfügung zu stellen.

Erfindungsgemäß werden diese Ziele mit einer Verpackungsfolie erreicht, die die im kennzeichnenden Teil des Anspruches 1 angegebenen Merkmale aufweist. Mit anderen Worten, es wird mit einem einzigen Strich ein Lackmaterial aufgebracht, das sich beim Trocknungsvorgang entmischt, wobei sich am Aluminium der Bestandteil, der die Korrosionsschutzwirkung entfaltet, konzentriert und anhaftet, und sich an der freien Oberfläche bzw. dieser benachbart, der Bestandteil konzentriert, der die Heißsiegelfähigkeit beiträgt.

Die Erfindung wird im Folgenden anhand von Beispielen näher erläutert, wobei von einem dem Stand der Technik entsprechenden Standardlack ausgegangen wird. Alle Prozentangaben, soweit sie Mengen betreffen, in der Beschreibung und den Ansprüchen, sind Gew.-%.

Vergleichsbeispiel:
Dieser Standardlack gemäß dem Stand der Technik besteht aus einer Epoxidharz-Zusammensetzung, die zu 70 Gew.-% aus 1-Methoxy-propanol, Dibasig-Ester (DBE), zB ein Gemisch aus verschieden langkettigen Dicarbonsäureestern mit unterschiedlichen Siedebereichen von 120°-200°C, je nach Einsatzgebiet für den Fachmann in dessen Kenntnis leicht auszuwählen, hochsiedenden Alkanen C11-C20 und aromatischen Kohlenwasserstoffen (KW's) C9-C11, 25 Gew.-% Gemisch aus Phenol-Novolak-Harzen und hochmolekularem Epoxidharz (MW mind. 30000, bestehend aus Formulierungen ausgehend von Bisphenol-A (BPA), Bisphenol-A-diglycidylether und 5 Gew.-% eines säuremodifizierten Polypropylen-Copolymeren in einem Mischer bei RT 1,5 Std gemischt und homogenisiert wird, besteht. Diese Mischung bedarf einer Auftragsmenge von mindestens 10g/m² mit einer Einbrennzeit von 20s bei 250°C, wobei die Oberflächentemperatur (Peak Metal Temperature PMT) mindestens 245°C erreichen muss.

### Beispiele:

### Allgemeines:

Die erfindungsgemäßen Materialien weisen unterschiedlichen Gehalt an Lösungsmitteln, an reaktiven Bindemitteln, an einer Siegelkomponente und an einem Säurekatalysator auf.

Dabei können die Lösungsmittel deren Siedepunkte zwischen 30°C und 250°C liegen, beispielsweise 2-Butanon, Methoxypropylacetat, Isopropylacetat, 1-Methoxy-propanol, Dibasig-Ester (DBE), Cyclohexan hochsiedendes Alkan C11-C20 oder Mischungen von zumindest zwei davon sein.

Die reaktiven Bindemittel, deren Glasübergangstemperaturen (Tg) zwischen 0°C und +200°C liegen, können beispielsweise reaktives Phenol-Resol-Harz (ein Reaktivprodukt aus einem mit Hydroxygruppen vernetztem Phenolharz), Phenol-Novolak-Harz, hochmolekulares Epoxidharz, alkylierte Aminoplastharze, hydroxylierter Copolyester, Polyvinylbutyral, Celluloseester, oder Mischungen von zumindest zwei davon sein.

Die Siegelkomponente, deren Glasübergangstemperaturen (Tg) zwischen -100°C und 100°C liegen, enthält, bzw. besteht beispielsweise aus epoxiverträglichem Polypropylen-Copolymer, PP-Copolymer/Homopolymerblend, PE/PP-Copolymeren Ethylen-Vinylacetat Copolymeren, amorphen α-Olefinen oder Mischungen von zumindest zwei davon sein;

Der Säurekatalysator ist ausgewählt aus der Gruppe der anorganischen Säuren z.B. Phosphorsäure, oder der organischen Säuren z.B. Paratoluolsulfonsäure oder Zitronensäure oder Mischungen von zumindest zwei davon sein.

### Beispiel 1

Zusammensetzung bestehend aus:
Lösungsmittel: 64 Gew.-% 1-Methoxy-propanol, Dibasig-Ester (DBE), hochsiedenden Alkanen C11-C20,
reaktive Bindemittel: 15 Gew.-% Gemisch aus reaktiven Phenol-Resol-Harzen und 15 Gew.-% hochmolekularem Epoxidharz (über 1700 g/mol),
Siegelkomponente: 5 Gew.-% eines epoxiverträglichen Polypropylen-Copolymeren d = 0,79g/m³ und 1 Gew.-% eines Säurekatalysators.

### Beispiel 2

Zusammensetzung bestehend aus:
Lösungsmittel: 64 Gew.-% 1-Methoxy-propanol, Dibasig-Ester (DBE), hochsiedenden Alkanen C11-C20,
reaktive Bindemittel: 12 Gew.-% Gemisch aus reaktiven Phenol-Resol-Harzen und 13 Gew.-% hochmolekularem Epoxidharz,
Siegelkomponente: 10 Gew.-% eines epoxiverträglichen Polypropylen-Copolymeren d = 0,79g/m³ und 1 Gew.-% eines Säurekatalysators.

### Beispiel 3

Zusammensetzung bestehend aus:
Lösungsmittel: 64 Gew.-% 1-Methoxy-propanol, Dibasig-Ester (DBE), hochsiedenden Alkanen C11-C20,
reaktive Bindemittel: 10 Gew.-% Gemisch aus reaktiven Phenol-Resol-Harzen und 10 Gew.-% hochmolekularem Epoxidharz
Siegelkomponente: 15 Gew.-% eines epoxiverträglichen Polypropylen-Copolymeren d = 0,79g/m³ und 1 Gew.-% eines Säurekatalysators.

### Beispiel 4

Zusammensetzung bestehend aus:
Lösungsmittel: 64 Gew.-% 1-Methoxy-propanol, Dibasig-Ester (DBE), hochsiedenden Alkanen C11-C20,
reaktive Bindemittel: 7,5 Gew.-% Gemisch aus reaktiven Phenol-Resol-Harzen und 7,5 Gew.-% hochmolekularem Epoxidharz
Siegelkomponente: 20 Gew.-% eines epoxiverträglichen Polypropylen-Copolymeren d = 0,79g/m³ und 1 Gew.-% eines Säurekatalysators.

### Beispiel 5

Es werden an:
Lösungsmittel: 65 Gew.-% 1-Methoxy-propanol, Dibasig-Ester (DBE), hochsiedenden Alkanen C11-C20,
reaktiven Bindemittel: 11 Gew.-% eines butylierten Melaminharzes, 8 Gew.-% eines Phenol-Novolak-Harzes,
Siegelkomponente: 15 Gew.-% eines PP-Copolymer/Homopolymerblends d=0,79g/cm³ und 1 Gew.-% eines Säurekatalysators im Mischer bei RT 1 Std bei RT gemischt und homogenisiert.

### Beispiel 6

Es werden an:
Lösungsmittel 18 Gew.-% 1-Methoxy-propanol, Dibasig-Ester (DBE), hochsiedenden Alkanen C11-C20,
reaktive Bindemittel: 46 Gew.-% eines butylierten Melaminharzes, 25 Gew.-% eines hochmolekularen Epoxid-Harzes,
Siegelkomponente 15 Gew.-% eines PP-Copolymer/Homopolymerblends d=0,79g/cm³ und 1 Gew.-% eines Säurekatalysators im Mischer bei RT 1,5 Std bei RT gemischt und homogenisiert.

### Beispiel 7

Es werden an:
Lösungsmittel 54 Gew.-% 1-Methoxy-propanol, Dibasig-Ester (DBE), hochsiedenden Alkanen C11-C20,
reaktive Bindemittel: 25 Gew.-% eines Phenol-Resol-Harzes, 10 Gew.-% eines thermoplastischen, gesättigten, mittelmolekularen, hydroxylierten Copolyesters (OH-Zahl > 10)
Siegelkomponente 15 Gew.-% eines PP-Copolymer/Homopolymerblends d=0,79g/cm³ und 1 Gew.-% eines Säurekatalysators im Mischer bei RT 1 Std gemischt und homogenisiert.

Für die Tabellen 1 und 2 gelten folgende Abkürzungen:
- A:: Beispielnummer
- B:: Reaktive Bindemittel (Gew.-%)
- C:: Siegelkomponente (Gew.-%)
- D:: Mischzeit (h)
- E:: Einbrennzeit (sec) - Einbrenntemperatur (°C)
- F:: Siegelnahtfestigkeit (N/15mm)
- G:: Korrosionsbeständigkeit gegen fetthaltige Füllgüter
- H:: Beurteilung der Phasentrennung mittels AFM-Spektroskopie

Bei den Beispielen 1-7 handelt es sich in Spalte B um ein prozentuales Mischungsverhältnis zweier verschiedener reaktiver Bindemittel (das Verhältnis ist beim Beispiel 5: 46 Teile von einem Stoff und 25 Teile von dem anderen Stoff, die Summe beträgt daher bei diesem Beispiel 71 Gew.-% Reaktives Bindemittel insgesamt.

**Tabelle 1**

| A | B | c | D | E | F | G | H |
|---|---|---|---|---|---|---|---|
| S tandar d | 25 | 5 | 1,5 h | 20sec 245°C | 4-6(PP) | Nach 1Wo weicher Lack und offene Behälter | Keine Phasentrennung sichtbar |
| 1 | 15:15 | 5 | 0,5 h | 10sec 220°C | 6-8(PP) | Nach 1 Wo weicher Lack keine offenen Becher | Phasentrennung sichtbar |
| 2 | 12:13 | 10 | 0,5 h | 5sec 220°C | 8-12(PP) | Nach 6 Mo Lack beständig keine offenen Becher | Eindeutige Phasentrennung nachweisbar |
| 3 | 10:10 | 15 | 0,3 h | 5sec 220°C | >15(PP) | Nach 6 Mo Lack beständig keine offenen Becher | Eindeutige Phasentrennung nachweisbar |
| 4 | 7,5:7,5 | 20 | 0,3 h | 5sec 220°C | Festversiegelnd (PP) | Nach 6 Mo Lack beständig keine offenen Becher | Eindeutige Phasentrennung nachweisbar |
| 5 | 11:8 | 15 | 1 h | 15sec 230°C | 5-7(PP) | Nach 48h offene Becher | Keine Phasentrennung sichtbar |
| 6 | 46:25 | 15 | 1,5 h | 25sec 225°C | <4(PP) | Nach 1 Wo weicher Lack keine offenen Becher | Phasentrennung sichtbar |
| 7 | 25:10 | 15 | 1 h | 10sec 250°C | Keine Siegelung | Keine Bewertung möglich | Phasentrennung sichtbar |

Die Tabelle 1 zeigt klar, dass durch die erfindungsgemäßen Zusammensetzungen deutliche Verbesserungen erzielt werden können. Besonders die Beispiele 2, 3 und 4 weisen eine hohe Korrosionsbeständigkeit auf, obwohl sowohl die Einbrenntemperatur als auch die Einbrennzeit sowie die Mischzeit verkürzt werden konnten.

Weiters konnten sehr gute Siegelwerte erreicht und die Phasentrennung mittels AFM-Spektroskopie nachgewiesen werden. Besonders vorteilhaft sind Mischungen von 20-30 Gew.-%. Bindemittel und 10-20 Gew.-% Siegelkomponente. Die anderen Beispiele können zur Abgrenzung dienen.

Die Standardzusammensetzung, ebenso wie die Beispiele 1-7, betreffen Zusammensetzungen, mit denen ausschließlich gegen Polypropylen gesiegelt werden kann. Im Gegensatz zum Stand der Technik ist es bei erfindungsgemäßen Materialien möglich, durch einfache Änderungen der Zusammensetzung auch Lacke zu erhalten, die nicht nur gegen Polypropylen sondern auch gegen Polyvinylchlorid, Polystyrol und A-Polyester siegelfähig sind. Diese sind in den Beispielen 8-12 angegeben.

Diese neuen, erfindungsgemäßen Lacke bestehen aus unterschiedlichen Gew.-% an Lösungsmitteln, deren Siedepunkte zwischen +30°C und +250°C liegen (2-Butanon, Methoxypropylacetat, Isopropylacetat, 1-Methoxy-propanol, Dibasig-Ester (DBE), Cyclohexan, hochsiedenden Alkanen C11-C20), reaktiven Bindemitteln, deren Glasübergangstemperaturen (Tg) zwischen 0°C und +200°C legen, (säurefunktionelles Vinyl/Vinyacetat copolymer, epoxifunktionelles Vinyl/Vinylacetat copolymer, hydroxifunktionelles Vinyl/Vinylacetat copolymer, PP-Copolymer/Homopolymerblend partiell säuremodifiziert, Polyvinylbutyral, Celluloseester), einer Siegelkomponente, deren Glasübergangstemperaturen (Tg) zum Einen zwischen -80 und -60°C und zum Zweiten zwischen +30 und +100°C liegen, (einer Dispersion von Methacrylsäureester/Olefin-Copolymeren) und einem Säurekatalysator, wie aus den folgenden Beispielen hervorgeht.

Der Säurekatalysator ist ausgewählt aus der Gruppe der anorganischen Säuren z.B. Phosphorsäure, oder der organischen Säuren z.B. Paratoluolsulfonsäure oder Zitronensäure oder beliebigen Mischungen.

### Beispiel 8

Es werden 67,3 Gew.-% 2-Butanon, Methoxypropylacetat, Isopropylacetat, 1-Methoxy-propanol, Dibasig-Ester (DBE), Cyclohexan, hochsiedenden Alkanen C11-C20, 6 Gew.-% eines säurefunktionelles Vinyl/Vinyacetat copolymers, 2,7 Gew.-% eines epoxifunktionellen Vinyl/Vinylacetat copolymeren, 12 Gew.-% eines hydroxifunktionellen Vinyl/Vinylacetat copolymeren, 9 Gew.-% einer Dispersion von Methacrylsäureester/Olefin-Copolymeren und 3 Gew.-% eines Säurekatalysators im Mischer bei RT 30 Min bei RT gemischt und homogenisiert.

### Beispiel 9

Es werden 67,3 Gew.-% 2-Butanon, Methoxypropylacetat, Isopropylacetat, 1-Methoxy-propanol, Dibasig-Ester (DBE), Cyclohexan, hochsiedenden Alkanen C11-C20, 6 Gew.-% eines säurefunktionelles Vinyl/Vinyacetat copolymers, 6,7 Gew.-% eines epoxifunktionellen Vinyl/Vinylacetat copolymeren, 8 Gew.-% eines hydroxifunktionellen Vinyl/Vinylacetat copolymeren, 9 Gew.-% einer Dispersion von Methacrylsäureester/Olefin-Copolymeren und 3 Gew.-% eines Säurekatalysators im Mischer bei RT 30 Min bei RT gemischt und homogenisiert.

### Beispiel 10

Es werden 67,3 Gew.-% 2-Butanon, Methoxypropylacetat, Isopropylacetat, 1-Methoxy-propanol, Dibasig-Ester (DBE), Cyclohexan, hochsiedenden Alkanen C11-C20, 6 Gew.-% eines säurefunktionelles Vinyl/Vinyacetat copolymers, 10,7 Gew.-% eines epoxifunktionellen Vinyl/Vinylacetat copolymeren, 4 Gew.-% eines hydroxifunktionellen Vinyl/Vinylacetat copolymeren, 9 Gew.-% einer Dispersion von Methacrylsäureester/Olefin-Copolymeren und 3 Gew.-% eines Säurekatalysators im Mischer bei RT 30 Min bei RT gemischt und homogenisiert.

### Beispiel 11

Es werden 67,3 Gew.-% 2-Butanon, Methoxypropylacetat, Isopropylacetat, 1-Methoxy-propanol, Dibasig-Ester (DBE), Cyclohexan, hochsiedenden Alkanen C11-C20, 6 Gew.-% eines säurefunktionelles Vinyl/Vinyacetat copolymers,14,7 Gew.-% eines epoxifunktionellen Vinyl/Vinylacetat copolymeren, 9 Gew.-% einer Dispersion von Methacrylsäureester/Olefin-Copolymeren und 3 Gew.-% eines Säurekatalysators im Mischer bei RT 30 Min bei RT gemischt und homogenisiert.

### Beispiel 12

Es werden 86 Gew.-% hochsiedenden Alkanen C11-C20, 14 Gew.-% eines PP-Copolymer/Homopolymerblends partiell säuremodifiziert d=0,79g/cm³ im Mischer bei RT 30 Min bei RT homogenisiert.

Erläuterungen zur folgenden Tabelle 2:
Beim Standard ist nur ein Bindemittel mit x = 25 Gew.-% in der Rezeptur anwesend, beim Beispiel 12 ist 0 Gew % Bindemittel in der Rezeptur enthalten.

Beim Beispiel 11 sind zwei Bindemittel mit 6 Teilen und 14,7 Teilen und damit mit insgesamt: x +y = 20,7 Gew.-% in der Rezeptur enthalten.

Bei den Beispielen 8-10 sind 3 Bindemittel mit z.B. beim Beispiel 7 mit 6 Teilen, 2,7 Teilen und 12 Teilen, somit in einer Gesamtmenge von x + y + z = 20,7 Gew.-% in der Rezeptur enthalten.

**Tabelle 2**

| A | B | c | D | E | F | G | H |
|---|---|---|---|---|---|---|---|
| Standard | 25 | 5 | 1,5 h | 20sec 245°C | 4-6 (PP) | Nach 1Wo weicher Lack und offene Behälter | Keine Phasentrennun g sichtbar |
| 8 | 6:2,7:12 | 9 | 0,5 h | 10sec 210°C | > 12(PP; PVC, PS,APE T) | Nach 6 Mo Lack beständig keine offenen Becher | Eindeutige Phasentrennun g nachweisbar |
| 9 | 6:6,7:8 | 9 | 0,5 h | 5sec 220°C | 8-10(PP,P VC, PS, APET) | Nach 6 Mo Lack beständig keine offenen Becher | Eindeutige Phasentrennun g nachweisbar |
| 10 | 6:10,7:4 | 9 | 0,5 h | 5sec 220°C | <5(PP,P VC, PS, APET) | Nach 1Wo weicher Lack und offene Behälter | Keine Phasentrennun g sichtbar |
| 11 | 6:14,7 | 9 | 0,5 h | 15sec 230°C | <5(PP,P VC, PS, APET) | Nach 48h offene Becher | Keine Phasentrennun g sichtbar |
| 12 | 0 | 14 | 0,5 h | 15sec 225°C | > 12(PP) | Nach 48h offene Becher | homogene Phase |

Neben der Möglichkeit, mit diesen neuen, erfindungsgemäßen Zusammensetzungen gegen mehrere Bechermaterialien (PVC, PS, A-PET) siegeln zu können, werden im Gegensatz zum Stand der Technik, wie vor allem bei den Beispielen 8 und 9 ersichtlich, selbst bei kürzeren Mischzeiten und niedriger Einbrennzeit und - temperatur gute Siegelwerte und hohe Korrosionsbeständigkeit erreicht.

Besonders vorteilhaft sind Mischungen, in welchen das Verhältnis der reaktiven Bindemittel in der Mischung folgendem entspricht:
x:y:z = 4-8 Gew.-%:2-10 Gew.-%:8-12 Gew.-%.

Alle weiteren Beispiele zeigen zur Abgrenzung dienende Verhältnisse.

Der erfindungsgemäße Lack enthält somit:
a) Zumindest ein Lösungsmittel, zB (Cyclo-)Alkane, Ketone, Carbonsäureester, Alkohole
b) zumindest ein reaktives Bindemittel,
c) zumindest eine Siegelkomponente, zB olefinischen Copolymere aus Ethen, Propen, (Iso-) buten, Hexen und Octen & Acrylsäure/olefinische Copolymere und
d) zumindest einen Säurekatalysator, hier wird darunter ein Katalysator verstanden, der zumindest ein Proton abgeben kann, zB Salzsäure.

Genauere Begriffe einiger in der Beschreibung und den Ansprüchen verwendeten Bezeichnungen:
Epoxidfunktionell: hochreaktiver cyclischer Ether;
hydroxymodifiziert: mit einer Hydroxylgruppe versehen in ein oder zwei Positionen am chemischen Gerüst;
epoxidverträglich: ähnliche Polaritäten beider Bindemittel;
säuremodifiziert: mit einer Säuregruppe versehen und mit hoher Polarität;
PP Copolymer/Homopolymerblend: Polypropylen-Homopolymer (PP-H) und Copolymere (insbesondere mit Ethen versehen);
Gruppen: Alkoholgruppen, cyclische Ethergruppen, Aminogruppen, Estergruppen, Acetalgruppen.

Allgemeines:
Alle Mengenangaben und Anteilsangaben, soweit sie nicht die Beispiele betreffen, insbesondere solche zur Abgrenzung der Erfindung, sind mit ± 10 % Toleranz zu verstehen, somit beispielsweise: 11 % bedeutet: von 9,9 % bis 12,1 %. Bei Bezeichnungen wie bei: "ein Lösungsmittel" ist das Wort "ein" nicht als Zahlwort, sondern als Fürwort anzusehen, wenn nicht aus dem Zusammenhang etwas anderes hervorgeht.

Der Begriff: "Kombination" bzw. "Kombinationen" steht, soferne nichts anderes angegeben, für alle Arten von Kombinationen, ausgehend von zwei der betreffenden Bestandteile bis zu einer Vielzahl derartiger Bestandteile, der Begriff: "enthaltend" steht auch für "bestehend aus".

## Patentansprüche

1. Siegelfähiger Korrosionsschutzlack für Verpackungsfolien zur Verpackung aggressiver Füllgüter wie parfümierte Creme, Öl, Fettemulsion, saure bzw. alkalische Reinigungsmittel, alkoholische Füllgüter, insbesondere für Platinen auf Aluminiumbasis, mit denen Becher oder Behälter, die mit derartigen Gütern gefüllt sind, versiegelt werden, wobei der Lack
a) Zumindest ein Lösungsmittel,
b) zumindest ein reaktives Bindemittel,
c) zumindest eine Siegelkomponente und
d) zumindest einen Säurekatalysator
enthält; **dadurch gekennzeichnet, dass**
a) das Lösungsmittel, dessen Siedetemperaturen zwischen +30 und +250°C liegt, z.B. 2-Butanon, Methoxypropylacetat, Isopropylacetat, 1-Methoxy-propanol, Dibasig-Ester (DBE), Cyclohexan, hochsiedendes Alkan C11-C20 oder eine Mischung zumindest zweier dieser Bestandteile ist; dass
b) das reaktive Bindemittel entweder eine Glasübergangstemperatur (Tg) zwischen 0°C und +200°C hat und aus der Gruppe der reaktiven Phenol-Resol-Harze, Phenol-Novolak-Harze, hochmolekularen Epoxidharze, alkylierten Melaminharze, hydroxylierten Copolyester, Polyvinylbutyral, Celluloseester stammt oder eine Mischung zumindest zweier dieser Bestandteile ist, oder dass das reaktive Bindemittel eine Glasübergangstemperatur (Tg) zwischen -100°C und +200°C hat und aus der Gruppe der reaktiven säuremodifizierten Vinyl/Vinylacetate Copolymere, epoxifunktionellen Vinyl/Vinylacetate Copolymer und hydroximodifiziertem Vinyl/Vinylacetat Copolymer ausgewählt ist oder eine Mischung zumindest zweier dieser Bestandteile ist; dass
c) die Siegelkomponente, deren Glasübergangstemperatur (Tg) zwischen -100°C und +100°C liegen, aus epoxiverträglichem Polypropylen-Copolymer, PP-Copolymer/Homopolymerblend, PE/PP-Copolymeren Ethylen-Vinylacetat Copolymeren, amorphen α-Olefinen oder Mischungen hiervon besteht; oder dass die Siegelkomponente ein Pfropfpolymer ist, dessen einer Bestandteil eine Glasübergangstemperatur (Tg) zwischen -100°C und +30°C, aufweist und dessen anderer Bestandteil eine Glasübergangstemperatur (Tg) zwischen -80 und -60°C aufweist; wobei die Siegelkomponente aus einer Dispersion von Methacrylsäureester/Olefin-Copolymeren besteht; und dass
d) der Säurekatalysator aus der Gruppe der anorganischen Säuren z.B. Phosphorsäure, oder der organischen Säuren z.B. Paratoluolsulfonsäure oder Zitronensäure ausgewählt ist oder aus einer Mischung zumindest zweier dieser Komponenten besteht.

2. Siegelfähiger Korrosionsschutzlack nach Anspruch 1, **dadurch gekennzeichnet, dass** er aus
a) 50 bis 70 Gew.-% Lösungsmittel,
b) 10 bis 30 Gew.-% reaktive Bindemittel,
c) 2 bis 20 Gew.-% Siegelkomponente und
d) 0,5 bis 3 Gew.-% Säurekatalysator
besteht.

3. Siegelfähiger Korrosionsschutzlack nach Anspruch 1 oder 2, **dadurch gekennzeichnet, dass** das reaktive Bindemittel aus zwei unterschiedlichen Komponenten besteht, nämlich aus 8 bis 15 Gew.-% reaktives Phenol-Resol-Harz und 8 bis 15 Gew.-% hochmolekulares Epoxidharz Polyvinylbutyral und Celluloseester, jeweils gemessen am fertigen Lack.

4. Siegelfähiger Korrosionsschutzlack nach Anspruch 1 oder 2, **dadurch gekennzeichnet, dass** das reaktive Bindemittel aus zwei unterschiedlichen Komponenten besteht, nämlich 6 bis 10 Gew.-% reaktives säuremodifiziertes Vinyl/Vinylacetat Copolymer und 2 bis 15 Gew.-% epoxifunktionelles Vinyl/Vinylacetat Copolymeren jeweils gemessen am fertigen Lack.

5. Siegelfähiger Korrosionsschutzlack nach Anspruch 1 oder 2, **dadurch gekennzeichnet, dass** das reaktive Bindemittel aus drei Komponenten besteht, nämlich 6 bis 10 Gew.-% reaktives säuremodifiziertes Vinyl/Vinylacetat Copolymer und 2 bis 15 Gew.-% epoxifunktionelles Vinyl/Vinylacetat Copolymeren und 4 bis 15 Gew.-% hydroximodifiziertem Vinyl/Vinylacetat Copolymeren, jeweils gemessen am fertigen Lack.

6. Siegelfähiger Korrosionsschutzlack nach einem der voranstehenden Ansprüche, **dadurch gekennzeichnet, dass** die Siegelkomponente PP-Copolymer/Homopolymerblend ist, die partiell säuremodifiziert d=0,79g/cm³, mit 10 bis 20 Gew.-% gemessen am fertigen Lack vorhanden ist, und gegebenenfalls auch als reaktives Bindemittel fungiert.

7. Siegelfähiger Korrosionsschutzlack nach einem der Ansprüche 1 bis 4, **dadurch gekennzeichnet, dass** die Siegelkomponente 5 bis 15 Gew.-% einer Dispersion von Methacrylsäureester/Olefin-Copolymeren ist, die, gemessen am fertigen Lack, ausmacht.

8. Siegelfähiger Korrosionsschutzlack nach einem der Ansprüche 1 bis 4, **dadurch gekennzeichnet, dass** die Siegelkomponente, aus epoxiverträglichem Polypropylen-Copolymer und/oder PP-Copolymer/Homopolymerblend und/oder PE/PP-Copolymeren Ethylen-Vinylacetat Copolymeren und/oder amorphen α-Olefinen besteht und 8 bis 20 Gew%, gemessen am fertigen Lack, ausmacht.

## Claims

1. Sealable corrosion protection lacquer for packaging films for packaging aggressive filling materials such as scented cream, oil, fatty emulsion, acidic or alkaline detergents, alcoholic filling materials, in particular for boards based on aluminium, with which beakers or containers filled with such materials are sealed, wherein the lacquer contains:
a) at least one solvent,
b) at least one reactive binder,
c) at least one sealing component, and
d) at least one acidic catalyst;
**characterised in that**
a) the solvent, the boiling temperature of which lies between +30 and +250°C, is e.g. 2-butanone, methoxypropyl acetate, isopropyl acetate, 1-methoxy-propanol, dibasic ester (DBE), cyclohexane, high-boiling alkane C11-C20 or a mixture of at least two of these components;
b) the reactive binder has either a glass transfer temperature (Tg) of between 0°C and +200°C and comes from the group of reactive phenol-resol resins, phenol-novolac resins, high-molecular epoxy resins, alkylated melamine resin, hydroxylated copolyester, polyvinyl butyral, cellulose ester or is a mixture of at least two of these components, or the reactive binder has a glass transfer temperature (Tg) of between - 100°C and +200°C and is selected from the group of reactive acid-modified vinyl/vinyl acetate copolymers, epoxy functional vinyl/vinyl acetate copolymer and hydroxy modified vinyl/vinyl acetate copolymer or is a mixture of at least two of these components;
c) the sealing component, the glass transfer temperature (Tg) of which lies between - 100°C and +100°C, consists of epoxy acceptable polypropylene copolymer, PP-copolymer/homopolymer blend, PE/PP copolymers ethylene vinyl acetate copolymers, amorphous α-olefins or mixtures thereof; or the sealing component is a graft polymer, one of the components of which has a glass transfer temperature (Tg) of between -100°C and +30°C and the other component of which has a glass transfer temperature (Tg) of between -80 and -60°C; wherein the sealing component consists of a dispersion of methacrylic acid esters/olefin co-polymers; and
d) the acidic catalyst is selected from the group of inorganic acids, e.g. phosphoric acid, or organic acids e.g. para-toluene sulphonic acid or citric acid or consists of a mixture of at least two of these components.

2. Sealable corrosion protection lacquer according to claim 1, **characterised in that** it consists of
a) 50 to 70% by weight of solvent,
b) 10 to 30% by weight of reactive binder,
c) 2 to 20% by weight of sealing component, and
d) 0.5 to 3% by weight of acidic catalyst.

3. Sealable corrosion protection lacquer according to claim 1 or 2, **characterised in that** the reactive binder consists of two different components, namely of 8 to 15% by weight of reactive phenol-resol resin and 8 to 15% by weight of high-molecular epoxy resin polyvinyl butyral and cellulose ester, in each case measured in the finished lacquer.

4. Sealable corrosion protection lacquer according to claim 1 or 2, **characterised in that** the reactive binder consists of two different components, namely 6 to 10% by weight of reactive acid-modified vinyl/vinyl acetate copolymer and 2 to 15% by weight of epoxy functional vinyl/vinyl acetate copolymers, in each case measured in the finished lacquer.

5. Sealable corrosion protection lacquer according to claim 1 or 2, **characterised in that** the reactive binder consists of three components, namely 6 to 10% by weight of reactive acid-modified vinyl/vinyl acetate copolymer and 2 to 15% by weight of epoxy functional vinyl/vinyl acetate copolymers and 4 to 15% by weight of hydroxy modified vinyl/vinyl acetate copolymers, in each case measured in the finished lacquer.

6. Sealable corrosion protection lacquer according to one of the preceding claims, **characterised in that** the sealing component is PP-copolymer/homopolymer blend, which is present in a partially acidic modified d=0.79g/cm³ manner, with 10 to 20% by weight measured in the finished lacquer, and which optionally also functions as the reactive binder.

7. Sealable corrosion protection lacquer according to one of claims 1 to 4, **characterised in that** the sealing component is 5 to 15% by weight of a dispersion of methacrylic acid ester/olefin copolymers, which amounts to this when measured in the finished lacquer.

8. Sealable corrosion protection lacquer according to one of claims 1 to 4, **characterised in that** the sealing component consists of epoxy acceptable polypropylene copolymer and/or PP-copolymer/homopolymer blend and/or PE/PP copolymers ethylene vinyl acetate copolymers and/or amorphous α-olefins and, measured in the finished lacquer, amounts to 8 to 20% by weight.

## Revendications

1. Vernis anti-corrosion scellable pour films d'emballage pour l'emballage de produits de remplissage agressifs tels que des crèmes parfumées, de l'huile, une émulsion grasse, des produits de nettoyage acides ou alcalins, des produits de remplissage alcooliques, en particulier pour des platines à base d'aluminium, avec lesquels des gobelets ou récipients, qui sont remplis de ce type de produits, sont scellés, dans lequel le vernis contient
a) au moins un solvant,
b) au moins un liant réactif,
c) au moins un composant de scellage, et
d) au moins un catalyseur acide ;
**caractérisé en ce que**
a) le solvant, dont les températures d'ébullition se situent entre +30 et +250 °C, est par exemple le 2-butanone, l'acétate de méthoxypropyle, l'acétate d'isopropyle, le 1-méthoxy-propanol, l'ester dibasique (DBE), le cyclohexane, l'alcane à haut point d'ébullition C11-C20 ou un mélange d'au moins deux de ces constituants ; que
b) le liant réactif soit a une température de transition vitreuse (Tg) comprise entre 0 °C et +200 °C et provient du groupe des résines phénoliques résol réactives, résines phénoliques novolac, résines époxydes macromoléculaires, résines mélaminiques alkylées, copolyesters hydroxylés, du polyvinylbutyral, de l'ester de cellulose soit est un mélange d'au moins deux de ces constituants, ou que le liant réactif soit a une température de transition vitreuse (Tg) comprise entre -100 °C et +200 °C et est choisi dans le groupe des copolymères vinyle/acétate de vinyle réactifs modifiés à l'acide, du copolymère vinyle/acétates de vinyle à fonction époxy et du copolymère vinyle/acétate de vinyle modifié par un hydroxyle soit est un mélange d'au moins deux de ces constituants ; que
c) le composant de scellage, dont la température de transition vitreuse (Tg) se situe entre - 100 °C et +100 °C, est constitué d'un copolymère polypropylène époxy compatible, d'un mélange homogène de copolymères PP/homopolymères, de copolymères PE/PP, de copolymères éthylène-acétate de vinyle, d'a-oléfines amorphes ou de mélanges de ceux-ci ; ou que le composant de scellage est un polymère greffé, dont un constituant présente une température de transition vitreuse (Tg) comprise entre -100 °C et +30 °C et dont l'autre constituant présente une température de transition vitreuse (Tg) comprise entre -80 et -60 °C ; dans lequel le composant de scellage est constitué d'une dispersion de copolymères ester d'acide méthacrylique/oléfine ; et que
d) le catalyseur acide est choisi dans le groupe des acides anorganiques par exemple l'acide phosphorique, ou des acides organiques par exemple l'acide paratoluènesulfonique ou l'acide citrique ou est constitué d'un mélange d'au moins deux de ces composants.

2. Vernis anti-corrosion scellable selon la revendication 1, **caractérisé en ce qu'**il est constitué de
a) 50 à 70 % en poids de solvant,
b) 10 à 30 % en poids de liant réactif,
c) 2 à 20 % en poids de composant de scellage et
d) 0,5 à 3 % en poids de catalyseur acide.

3. Vernis anti-corrosion scellable selon la revendication 1 ou 2, **caractérisé en ce que** le liant réactif est constitué de deux composants différents, à savoir de 8 à 15 % en poids de résine phénolique résol réactive et de 8 à 15 % en poids de résine époxyde macromoléculaire, de polyvinylbutyral et d'ester de cellulose, respectivement mesuré sur le vernis fini.

4. Vernis anti-corrosion scellable selon la revendication 1 ou 2, **caractérisé en ce que** le liant réactif est constitué de deux composants différents, à savoir de 6 à 10 % en poids de copolymère vinyle/acétate de vinyle réactif modifié à l'acide et de 2 à 15 % en poids de copolymères vinyle/acétate de vinyle à fonction époxy, respectivement mesuré sur le vernis fini.

5. Vernis anti-corrosion scellable selon la revendication 1 ou 2, **caractérisé en ce que** le liant réactif est constitué de trois composants, à savoir de 6 à 10 % en poids de copolymère vinyle/acétate de vinyle réactif modifié à l'acide et de 2 à 15 % en poids de copolymères vinyle/acétate de vinyle à fonction époxy et de 4 à 15 % en poids de copolymères vinyle/acétate de vinyle modifié par de l'hydroxyle, respectivement mesuré sur le vernis fini.

6. Vernis anti-corrosion scellable selon l'une quelconque des revendications précédentes, **caractérisé en ce que** le composant de scellage est un mélange homogène de copolymères PP/homopolymères, qui, de manière partiellement modifiée à l'acide, d=0,79 g/cm³, est présent avec 10 à 20 % en poids mesuré sur le vernis fini, et fonctionne éventuellement également en tant que liant réactif.

7. Vernis anti-corrosion scellable selon l'une quelconque des revendications 1 à 4, **caractérisé en ce que** le composant de scellage est 5 à 15 % d'une dispersion de copolymères ester d'acide méthacrylique/oléfine, qui, mesuré sur le vernis fini, représente.

8. Vernis anti-corrosion scellable selon l'une quelconque des revendications 1 à 4, **caractérisé en ce que** le composant de scellage est constitué d'un copolymère polypropylène époxy compatible et/ou d'un mélange homogène de copolymères PP/homopolymères et/ou de copolymères PE/PP, de copolymères éthylène-acétate de vinyle et/ou d'a-oléfines amorphes et représente 8 à 20 % en poids, mesuré sur le vernis fini.
